# EUROPEAN PATENT SPECIFICATION

(11) **EP 2 385 332 B1**
(45) Date of publication and mention of the grant of the patent: **08.01.2014**
(21) Application number: 10161915.3
(22) Date of filing: 04.05.2010
(51) Int. Cl.: F25D 27/00, F25D 17/04

(54) **Method for preserving food, particularly vegetables, in a refrigerator compartment**
Verfahren zur Konservierung von Lebensmitteln, insbesondere Gemüse, in einem Kühlschrankfach
Procédé pour préserver les aliments, particulièrement les légumes, dans le compartiment d'un réfrigérateur

(43) Date of publication of application: 09.11.2011
(73) Proprietor: WHIRLPOOL CORPORATION, Benton Harbor Michigan 49022 (US)
(72) Inventor: Biotti, Carolina, 21025, Comerio (IT); Olivani, Andrea, 21025, Comerio (IT); Monticelli, Enrica, 21025, Comerio (IT)
(74) Representative: Guerci, Alessandro

(56) References cited:
- EP-A2- 0 312 060
- WO-A1-2007/125122
- JP-A- 2005 164 131
- US-A1- 2007 180 843
- US-A1- 2008 066 475

## Description

The present invention relates to a method for preserving food in a refrigerator compartment, the refrigerator having a compressor for driving a refrigerant flow in a refrigeration circuit and means for treating said food with light. The present invention relates also to a refrigerator implementing such method. With the term refrigerator we mean every kind of appliances for preserving food at a predetermined low temperature, independently on the number of refrigerator compartments and set temperatures thereof.

One of the newest technologies applicable to a refrigerator compartment, particularly a refrigerator crisper bin, in order to enhance the final quality of stored food as fresh fruits and vegetables is visible light. In fact, it has been noticed that light, in particular blue and red visible wavelengths, is able to promote photosynthesis in fresh green produce. Photosynthesis is a biochemical process by which plants use the energy from sunlight to produce sugar, oxidizing water with oxygen release and reducing carbon dioxide. It has been recently discovered that part of the simple sugars produced are turned into vitamin C by a specific enzyme. So that, the application of LEDs (light-emitting diodes) to the crisper bin top wall is designed to increase the vitamin C content in fresh green vegetables.

Photosynthesis is divided into two phases: the light dependent phase where energetic molecules such as ATP are produced and a dark phase where carbon dioxide is fixed and converted into sugar. So, as the artificial light aims at reproducing the biochemical processes that occur in nature, a light working algorithm should be properly designed considering that the light dependent phase should last at least six hours.

The problem of using light sources in a refrigerator compartment is the amount of thermal energy introduced into the compartment itself, even if sources with a low thermal emission as LEDs are used. The applicant has discovered that during a continuative six hours treatment with light the temperature inside the crisper raises up to 3°C higher than the regime value without light treatment. Temperature increase is responsible for fruits and vegetables transpiration that causes fasten ripening and so food decay. Higher temperature, at the same time, affects the overall thermodynamic performances of the refrigerator.

It is an object of the present invention to provide a method for solving the above technical problem.

A method and a refrigerator according to the preamble of claims 1 and 5 respectively is known from WO 2007 125 122 A1.

According to the invention, such object is reached thanks to the features listed in the appended claims.

One of the main features of the method according to the invention is to module the on-off phase of light considering both food preservation performances and temperature increase issue. In particular, the light on phase is activated during the compressor on phase. In this way the compressor on phase will be longer than the phase on current refrigerators and each cooling cycle will be less frequent, causing a reduced stress in all food items stored into the refrigerator and a higher thermodynamic efficiency of the appliance.

According to a preferred embodiment of the invention, the lighting system presents a plurality of LEDs of two different colours, blue and red. According to a most preferred embodiment, the lighting system is made up of a combination of six LEDs: four blue and two red.

Considering that plant receptors are stimulated and start the first photosynthesis phase if lit up for at least 20 minutes, the lighting cycle (composed of several light-on intervals) is preferably of 20 min on and 60 min off. The technical solution according to the present invention represents the best compromise between food preservation and thermodynamic of the refrigeration circuit.

Further features and advantages of a method according to the present invention will become clear from the following detailed description, provided as non limiting example, with reference to the attached drawings in which:
- figure 1 is a diagram showing the temperature oscillation in the refrigerator cavity according to the present invention, compared with the oscillation in a traditional refrigerator and in a refrigerator in which the light system is switched on when the compressor is switched off; and
- figure 2 is a plane view (from the bottom) of a lid of a crisper bin according to the invention.

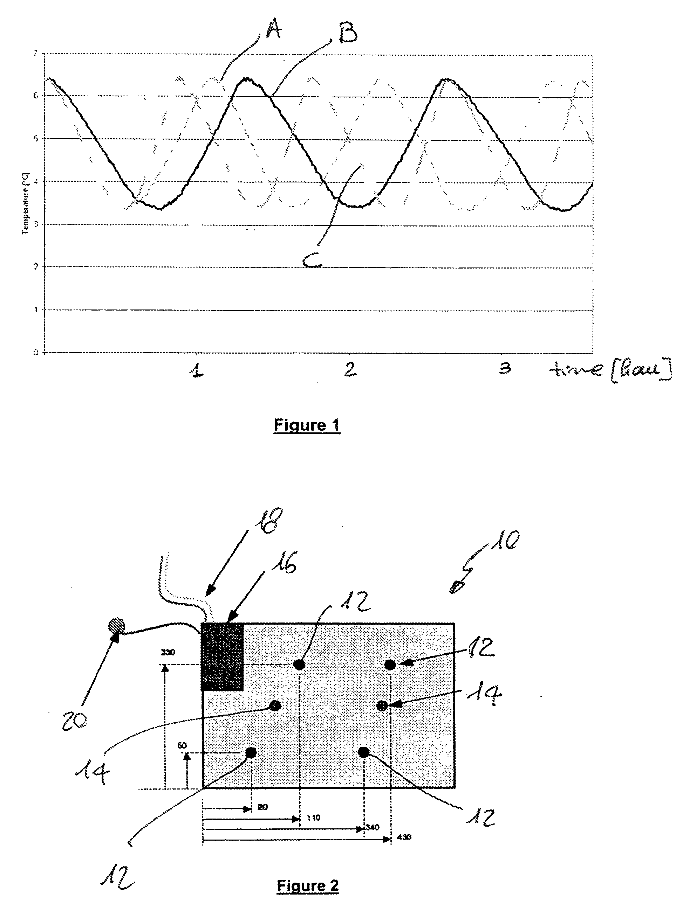

With reference to figure 2, under crisper glass shelf a plate 10 is placed endowed with six LEDs. The plate has an overall dimension of about 450 mm x 380 mm. The LEDs 12 (four) are blue and the LEDs 14 (two) are red. The LEDs 12 and 14 are positioned in such a way that the light coming from the different coloured light is perfectly mixed up and is able to cover all crisper surface. The plates 10 supports also a driver electronic board 16 connected to power cables 18. Of course the electronic board 16 can be integral with the electronic control unit (not shown) of the refrigerator. A light sensor 20 may be also connected to the board 16 and is used to monitor the effective light intensity inside the crisper bin.
To provide sufficient light intensity in the crisper bin, Luxeon K2 lights were selected, which are produced and sold by Luxeon Star leds.
Tests carried out by the applicant have shown that a minimum number of four blue and two red lights are required to supply the needed light intensity on the working plane.

In figure 1 dotted line A shows how the temperature changes inside a crisper bin in a traditional refrigerator (i.e. without the lighting system). By using a lighting system and adopting the method according to the invention, in which the compressor is switched on in phase with the lights, the oscillation curve (indicated with solid line B) has a lower frequency of oscillation. On the contrary, if the compressor is switched on in counter-phase with the lights, the result is shown with dotted C in which the oscillation has a higher frequency than the "baseline" A (and of course higher than the curve B according to the invention).

The method according to the present invention may be implemented together with a humidity control method so that, the on/off cycle of the lighting system applied into the cavity is designed considering both temperature and humidity control. In particular, during the compressor off phase the fan runs increasing the relative humidity inside the cavity and generating better conditions to stimulate photosynthesis. Later on, during the compressor on phase, the light will be switched on and the photosynthesis phase 1 (simulating sun light) is able to start keeping temperature under control.

## Claims

1. Method for preserving food in a refrigerator compartment, the refrigerator having a compressor for driving a refrigerant flow in a refrigeration circuit and means for treating said food with light, **characterised in that** said means for treating the food with light is switched on and off in phase with the compressor switching on and off.

2. Method according to claim 1, wherein said refrigerator compartment is a crisper bin provided with a top wall (10) having a plurality of LEDs (12, 14).

3. Method according to claim 2, wherein said LEDs are blue and red and they are positioned in order to mix the light coming from the different coloured LEDs (12, 14).

4. Method according to claim 3, wherein the crisper bin is provided with six LEDs, four blue (12) and two red (14).

5. Refrigerator having a compartment for preserving food, and comprising a compressor for driving a refrigerant flow in a refrigeration circuit and means for treating said food with light, **characterised in that** it further comprises a control unit (16) adapted to switch on and off said means for treating the food with light in phase with the compressor switching on and off.

6. Refrigerator according to claim 5, wherein said refrigerator compartment is a crisper bin provided with a top wall (10) having a plurality of LEDs (12, 14).

7. Refrigerator according to claim 6, wherein said LEDs are blue and red and they are positioned in order to mix the light coming from the different coloured LEDs (12, 14).

8. Refrigerator according to claim 7, wherein the crisper bin is provided with six LEDs, four blue (12) and two red (14).

## Patentansprüche

1. Verfahren zum Aufbewahren von Lebensmitteln in einem Kühlschrankfach, wobei der Kühlschrank einen Kompressor zum Antreiben eines Kühlstroms in einem Kühlkreis und Mittel zum Behandeln der Lebensmittel mit Licht aufweist, **dadurch gekennzeichnet, dass** das Mittel zum Behandeln der Lebensmittel mit Licht in gleicher Phase mit dem An- und Abschalten des Kompressors an- und abgeschaltet wird.

2. Verfahren nach Anspruch 1, wobei das Kühlschrankfach ein Gemüsefach ist, das mit einer oberen Wand (10) mit mehreren LED (12, 14) versehen ist.

3. Verfahren nach Anspruch 2, wobei die LED blau und rot sind und zum Mischen des Lichts, das von den verschieden farbigen LED (12, 14) kommt, angeordnet sind.

4. Verfahren nach Anspruch 3, wobei das Gemüsefach mit sechs LED versehen ist, vier blaue (12) und zwei rote (14).

5. Kühlschrank mit einem Kühlschrankfach zum Aufbewahren von Lebensmitteln und aufweisend einen Kompressor zum Antreiben eines Kühlstroms in einem Kühlkreis und Mittel zum Behandeln der Lebensmittel mit Licht, **dadurch gekennzeichnet, dass** er ferner eine Steuereinheit (16) umfasst, die zum An- und Abschalten des Mittels zum Behandeln der Lebensmittel mit Licht in gleicher Phase mit dem An- und Abschalten des Kompressors geeignet ist.

6. Kühlschrank nach Anspruch 5, wobei das Kühlschrankfach ein Gemüsefach ist, das mit einer oberen Wand (10) mit mehreren LED (12, 14) versehen ist.

7. Kühlschrank nach Anspruch 6, wobei die LED blau und rot sind und zum Mischen des Lichts, das von den verschieden farbigen LED (12, 14) kommt, angeordnet sind.

8. Kühlschrank nach Anspruch 7, wobei das Gemüsefach mit sechs LED versehen ist, vier blaue (12) und zwei rote (14).

## Revendications

1. Procédé de conservation d'aliments dans un compartiment de réfrigérateur, le réfrigérateur ayant un compresseur pour entraîner un écoulement de réfrigérant dans un circuit de réfrigération et des moyens pour traiter les aliments avec de la lumière, caractérisé en que lesdits moyens de traitement des aliments avec de la lumière sont branchés et débranchés en phase avec le branchement et le débranchement du compresseur.

2. Procédé selon la revendication 1, dans lequel ledit compartiment du réfrigérateur est un bac à légumes pourvu d'une paroi supérieure (10) ayant une série de DEL (12, 14).

3. Procédé selon la revendication 2, dans lequel lesdites DEL sont bleues et rouges et elles sont positionnées en sorte de mixer la lumière venant des DEL (12, 14) de différentes couleurs.

4. Procédé selon la revendication 3, dans lequel le bac à légumes est pourvu de six DEL, quatre bleues (12) et deux rouges (14).

5. Réfrigérateur ayant un compartiment pour conserver les aliments et comprenant un compresseur pour entraîner un écoulement de réfrigérant dans un circuit de réfrigération et des moyens pour traiter lesdits aliments avec de la lumière, **caractérisé en ce que** qu'il comprend une unité de commande (16) qui est à même de brancher et de débrancher lesdits moyens de traitement des aliments avec de la lumière en phase avec le branchement et le débranchement du compresseur.

6. Réfrigérateur selon la revendication 5, dans lequel ledit compartiment du réfrigérateur est un bac à légumes pourvu d'une paroi supérieure (10) ayant une série de DEL (12, 14).

7. Réfrigérateur selon la revendication 6, dans lequel lesdites DEL sont bleues et rouges et elles sont positionnées en sorte de mixer la lumière venant des DEL (12, 14) de différentes.couleurs.

8. Réfrigérateur selon la revendication 7, dans lequel le bac à légumes est pourvu de six DEL, quatre bleues (12) et deux rouges (14).
